# EUROPEAN PATENT SPECIFICATION

(11) **EP 2 417 660 B1**
(45) Date of publication and mention of the grant of the patent: **01.08.2018**
(21) Application number: 09843140.6
(22) Date of filing: 06.04.2009
(51) Int. Cl.: H01M 8/02, H01M 8/04

(54) **SELECTIVELY SEALING FUEL CELL POROUS PLATE**
SELEKTIV DICHTENDE PORÖSE BRENNSTOFFZELLENPLATTE
SCELLEMENT SÉLECTIF D'UNE PLAQUE POREUSE POUR PILE À COMBUSTIBLE

(43) Date of publication of application: 15.02.2012
(73) Proprietor: Audi AG, 85045 Ingolstadt (DE)
(72) Inventor: VICTOR, Stephen, P., Guilford CT 06437 (US); MADDEN, Thomas, H., Glastonbury CT 06033 (US); NIEZELSKI, David, A., Manchester CT 06042 (US); RIDGEWAY, Kristoffer, Simsbury CT 06070 (US)
(86) International application number: PCT/US2009/039584
(87) International publication number: WO 2010/117353

(56) References cited:
- EP-A1- 1 231 655
- US-A- 5 523 175
- US-A1- 2002 006 539
- US-A1- 2003 152 821
- US-A1- 2004 131 916
- US-A1- 2004 137 303
- US-A1- 2007 190 401
- US-A1- 2008 044 715

## Description

### BACKGROUND

This disclosure relates to sealing components of a fuel cell stack assembly, which includes an anode, a cathode and an electrode assembly.

A fuel cell typically includes dozens or more cells arranged to provide the cell stack assembly. Each cell includes an anode, a cathode and an electrode assembly. In one type of fuel cell, the anode and the cathode are provided by porous plates having flow fields that respectively supply fuel and reactant to the electrode assembly. Porous plates can be used to transport water, which can also be utilized as coolant. For some fuel cells it is desirable to use internal manifolds, which are located inside an outer perimeter of the porous plates. The internal manifolds carry a fluid flow, such as fuel, reactant and/or coolant. The flow through the internal manifolds must be contained in some manner to prevent overboard leakage from the cell stack assembly.

Traditional fuel cell stack assembly designs use interfacial seals between the components of the cell stack assembly. The interfacial seals are arranged between the lateral sides of the anode, the cathode and the electrode assembly to prevent the fuel and reactant from escaping their respective flow fields thereby bypassing the electrode assembly and intermixing undesirably with one another. One type of interfacial seal is provided by a gasket having adhesive that is applied to the face of the porous plate. The adhesive can migrate into the porous plate and enter the flow field, for example, which can contaminate coolant within the cell stack assembly.

US 2007/0190401 A1 discloses an anode electrode comprising a gas diffusion layer and a microporous layer as well as hydrophobic regions. The hydrophobic regions are non-porous, while the gas diffusion layer and the microporous layer are porous. The non-porous regions are formed, for example, by impregnating the gas diffusion layer with a fluoromer-carbon paste.

US 5 523175 discloses fuel cell plates comprising porous bodies having non-porous edge regions. The edge regions are made non-porous by impregnating them with a liquid but curable material, followed by curing the impregnating material.

US 2004/0131916 A1 discloses anode and cathode separators, each including a gas diffusion layer and a flow field gasket. The gas diffusion layers are porous, and the flow field gaskets are non-porous and are provided separately.

EP 1 231 655 A1 discloses the formation of an electrically conducting hard carbon film on a separator for improving corrosion resistance. The hard carbon film can be formed, for example, by chemical vapour deposition.

US 2004/0137303 A1 discloses a fuel cell comprising gas diffusion layers constituted by a porous body such as a carbon fiber and portions having a comparatively low void content which are formed by impregnating a gasket forming material on the surface of protruding portions of the porous body in a plan direction.

### SUMMARY

Subject-matter of the present invention is a method of manufacturing a porous structure for a fuel cell as claimed in independent claim 1. Embodiments of the invention are defined in the respective dependent claims.

The non-porous region has a porosity that is less than the porosity of the porous structure. The non-porous region prevents undesired leakage of fluid from the porous structure and prevents migration of adhesive associated with the seals, which can contaminate the porous structure.

Further embodiments of the invention are set out in the following numbered paragraphs:
1. A method of manufacturing a porous structure for a fuel cell comprising: providing a porous structure; and processing the porous structure to selectively produce a non-porous region on the porous structure.
2. The method according to paragraph 1, wherein the porous structure is one of an anode porous plate and a cathode porous plate.
3. The method according to paragraph 2, wherein the porous structure includes a surface having channels that provide a flow field.
4. The method according to any of paragraphs 1 to 3, wherein the processing includes treating at least one surface of the porous structure to produce the non-porous region.
5. The method according to paragraph 4, wherein the processing includes densifying the at least one surface.
6. The method according to paragraph 5, wherein the processing includes exposing the at least one surface to a carbon-rich environment.
7. The method according to paragraph 6, wherein the carbon-rich environment is provided in a chemical vapor deposition process.
8. The method according to any of paragraphs 4 to 7, wherein the at least one surface is a perimeter of the porous plate.
9. The method according to paragraph 8, wherein the processing includes arranging multiple porous plates adjacent to one another and treating the perimeter of the multiple porous plates simultaneously.
10. The method according to paragraph 8 or 9, wherein the porous structure includes an internal manifold, the perimeter arranged outside of the internal manifold.
11. The method according to any of paragraphs 4 to 10, wherein the processing includes forming multiple channels that provide a flow field, the forming step performed subsequent to the treating step.
12. The method according to any of paragraphs 4 to 11, wherein the processing includes applying a seal to the non-porous region, the applying step performed subsequent to the treating step.
13. The method according to any of paragraphs 5 to 12, wherein the porous structure includes a first porosity and the non-porous region includes a second porosity that is less than the first porosity.
14. A fuel cell component comprising: a porous structure having a first porosity and providing multiple surfaces, a portion of at least one of the surfaces providing a non-porous region having a second porosity that is less than the first porosity.
15. The fuel cell component according to paragraph 14, wherein the porous structure is one of an anode porous plate and a cathode porous plate.
16. The fuel cell component according to paragraph 15, wherein the porous structure includes a surface having channels that provide a flow field.
17. The fuel cell component according to paragraph 14, wherein a seal is arranged on the non-porous region.
18. The fuel cell component according to paragraph 15, wherein the non-porous region is a perimeter of the one of an anode porous plate and a cathode porous plate.
19. The fuel cell component according to paragraph 18, wherein the one of an anode porous plate and a cathode porous plate includes an internal manifold, the perimeter arranged outside of the internal manifold.
20. A fuel cell comprising: a cell stack assembly including a cell having an anode and a cathode, at least one of the anode and cathode including a porous structure providing a flow field, the porous structure having a first porosity and providing multiple surfaces, a portion of at least one of the surfaces providing a non-porous region having a second porosity that is less than the first porosity.

These and other features of the disclosure can be best understood from the following specification and drawings, the following of which is a brief description.

### BRIEF DESCRIPTION OF THE DRAWINGS

Figure 1 is a schematic perspective view of an exemplary fuel cell.
Figure 2 is a partial elevational view of a porous structure prior to processing, in accordance with an embodiment.
Figure 3 is a partial cross-sectional view taken along line 3-3 in Figure 2 during processing to produce a non-porous, densified region.
Figure 4 is a partial elevational view of the porous structure shown in Figure 2 during processing subsequent to densification.
Figure 5 is a partial cross-sectional view taken along line 5-5 of Figure 4 subsequent to machining and with a seal installed.
Figure 6 is a partial cross-sectional view of two porous structures with non-porous, densified regions.

### DETAILED DESCRIPTION

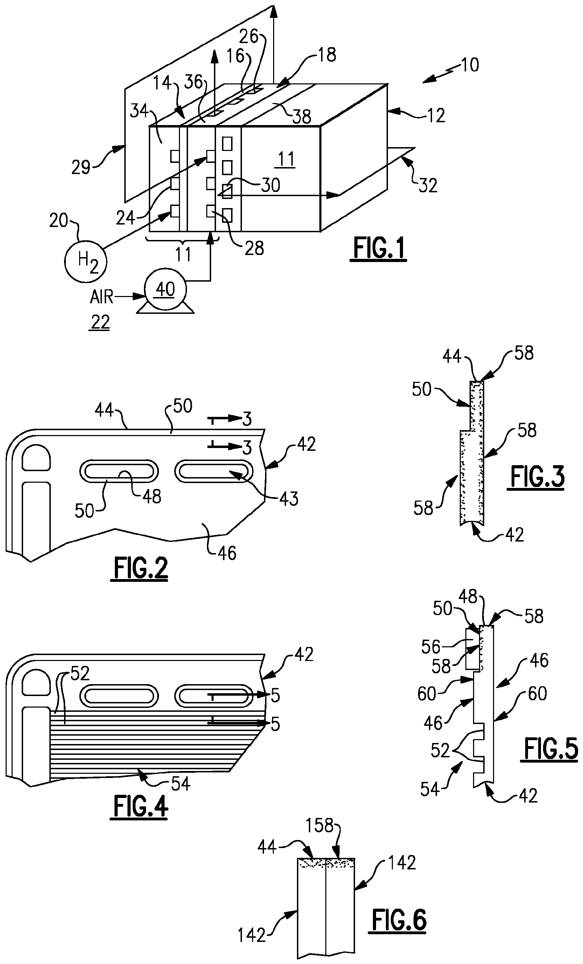

A highly schematic view of a fuel cell 10 is shown in Figure 1, in accordance with an embodiment of this disclosure. The fuel cell 10 includes multiple cells 11 that provide a cell stack assembly 12. Each cell 11 includes an electrode assembly 16 arranged between an anode 14 and a cathode 18, respectively provided by an anode plate 34 and a cathode plate 36. In one example, the electrode assembly 16 includes a proton exchange membrane and gas diffusion layers. Each anode plate 34 includes a fuel flow field 24, provided by channels in the anode plate 34 that are in fluid communication with a fuel source 20. The fuel source 20 is hydrogen, in one example. The cathode plate 36 provides a reactant flow field 26, provided by channels in the cathode plate 36 that are in fluid communication with an oxidant or reactant source 22. In one example, the oxidant is provided by air supplied by a pump 40.

Each cell 11 typically includes a coolant flow field 30 that may be provided by a separate structure, such as coolant plate 38, or integrated into one of the components of the cell 11. For integrated structures, the cathode plate 36 includes a water flow field 28 that transports product water, which can also be used as a coolant. When using a separate structure, the coolant flow field 30 may include a coolant loop 32 for circulating coolant within the cell stack assembly 12 to maintain the fuel cell 10 at or below a desired operating temperature. In other embodiments, a hybrid of both separate and integrated coolant structures can be used in a fuel cell.

In the example fuel cell 10, the anode plate 34 and cathode plate 36 are porous structures that permit water to be transported through the plates as well as fuel and reactant. The porous structure, indicated at 42 in Figures 2-5, must be sealed to prevent undesired leakage of gases from the anode and cathode plates 34, 36. In some fuel cell configurations, external manifolds are arranged about the perimeter of the plates and sealed to the plates using a gasket material. In other fuel cell configurations, it is desirable to use an internal manifold 43, which is contained within a perimeter 44 of the porous structure 42.

The porous structure 42 includes multiple features provided by a perimeter 44, opposing faces 46, edges 48 that define internal passages and recesses 50 that are configured to receive seals or gaskets. At least one of the faces 46 includes channels 52 that provide flow fields in communication with the manifolds 43.

It is desirable to contain the fluids, comprising gases and water, within the porous structure 42. To this end, one or more of the surfaces of the porous structure 42 are selectively processed to produce non-porous regions that prevent the leakage of gases and/or water. In one example, one or more of the surfaces of the porous structure 42 are treated by depositing carbon on the surfaces using a chemical vapor deposition (CVD) process to densify the exposed surfaces. In one example, the porous structure 42 is placed in a chamber with a carbon-rich environment, which can be provided by methane gas. The temperature and flow rate of the methane gas is configured to evolve carbon from the gas, which is deposited onto the exposed surfaces. The porous structure 42 can be unmasked, as illustrated by the process depicted in Figures 2-5 or masked to selective densify the porous structure 42, as depicted in Figure 6.

Referring to Figures 2-5, the porous structure 42 is processed to produce one or more non-porous regions 58, such as by a CVD process. The non-porous region 58 has a porosity that is less that the porous structure 42. In one example, the non-porous region 58 is solid. The exposed surfaces, which in the example include the perimeter 44, opposing faces 46, edge 48 and recess 50, are densified as shown in Figure 3. Next, channels 52 for a flow field 54 are machined into a face 46 to expose the porous structure 42 on a machined surface 60, shown in Figure 4, which enables the flow of fluid through the porous structure 42 as desired. Other features can be provided on the machined surface 60 as well. The perimeter 44, edge 48 and recess 50 remain non-porous, preventing fluid leaks at those sites. Thus, an internal manifold 43 can be used without fluid leaking from the cell stack assembly 12. A seal 56 is applied to the recess 50, which, since it has been densified, no longer permits migration of adhesive into the porous structure 42.

Referring to Figure 6, porous structures 142 are arranged adjacent to one another and used to mask surfaces for which densification is desired. In the example, the porous structures 142 are assembled with the perimeters 44 exposed. The perimeters 44 are densified, for example, using a CVD process. In this manner, fluid is prevented from leaking out of the cell stack assembly 12 at the perimeter 44.

## Claims

1. A method of manufacturing a porous structure for a fuel cell comprising: providing a porous structure; and processing the porous structure to selectively produce a non-porous region on the porous structure, wherein the processing includes treating at least one surface (46) of the porous structure (42) to produce the non-porous region, next, performed subsequent to the treating step, channels (52) for a flow field (54) are machined into the at least one surface (46) to expose the porous structure, the non-porous region (58) including a recess (50) receiving a seal (56) and preventing migration of adhesive associated with the seal (56), which can contaminate the porous structure.

2. The method according to claim 1, wherein the porous structure (42) is one of an anode porous plate (34) and a cathode porous plate (36)

3. The method according to claim 1 or 2, wherein the processing includes densifying the at least one surface (46).

4. The method according to claim 3, wherein the processing includes exposing the at least one surface (46) to a carbon-rich environment.

5. The method according to claim 4, wherein the carbon-rich environment is provided in a chemical vapor deposition process.

6. The method according to claim 1, wherein the processing includes applying a seal (56) to the non-porous region (58), the applying step performed subsequent to the treating step.

7. The method according to claim 3, wherein the porous structure (42) includes a first porosity and the non-porous region (58) includes a second porosity that is less than the first porosity.

## Patentansprüche

1. Verfahren zum Herstellen einer porigen Struktur für eine Brennstoffzelle, umfassend:
Bereitstellen einer porigen Struktur; und Bearbeiten der porigen Struktur, um selektiv einen nichtporigen Bereich auf der porigen Struktur herzustellen, wobei das Bearbeiten ein Behandeln von mindestens einer Oberfläche (46) der porigen Struktur (42) umfasst, um den nichtporigen Bereich herzustellen, wobei als nächstes, auf den Behandlungsschritt folgend, Kanäle (52) für ein Strömungsfeld (54) in die mindestens eine Oberfläche (46) hinein gespant werden, um die porige Struktur freizulegen, wobei der nichtporige Bereich (58) eine Aussparung (50) umfasst, die eine Dichtung (56) aufnimmt und eine Wanderung eines Adhäsionsmittels in Zusammenhang mit der Dichtung (56) unterbindet, die die porige Struktur verunreinigen kann.

2. Verfahren nach Anspruch 1, wobei die porige Struktur (42) eine von einer porigen Anodenplatte (34) und einer porigen Kathodenplatte (36) ist.

3. Verfahren nach Anspruch 1 oder 2, wobei das Bearbeiten ein Verdichten der mindestens einen Oberfläche (46) umfasst.

4. Verfahren nach Anspruch 3, wobei das Bearbeiten ein Aussetzen der mindestens einen Oberfläche (46) einer kohlenstoffreichen Umgebung umfasst.

5. Verfahren nach Anspruch 4, wobei die kohlenstoffreiche Umgebung in einem Chemische-Gasphasenabscheidungs-Prozess bereitgestellt wird.

6. Verfahren nach Anspruch 1, wobei das Bearbeiten ein Anwenden einer Dichtung (56) an dem nichtporigen Bereich (58) umfasst, wobei der Anwendeschritt auf den Behandlungsschritt folgend durchgeführt wird.

7. Verfahren nach Anspruch 3, wobei die porige Struktur (42) eine erste Porigkeit umfasst und der nichtporige Bereich (58) eine zweite Porigkeit, die kleiner ist als die erste Porigkeit, umfasst.

## Revendications

1. Procédé de fabrication d'une structure poreuse pour une pile à combustible comprenant :
la fourniture d'une structure poreuse ; et la transformation de la structure poreuse pour produire sélectivement une région non poreuse sur la structure poreuse, dans lequel la transformation comprend le traitement d'au moins une surface (46) de la structure poreuse (42) pour produire la région non poreuse, ensuite, effectué après l'étape de traitement, l'usinage de canaux (52) pour un champ d'écoulement (54) dans l'au moins une surface (46) pour exposer la structure poreuse, la région non poreuse (58) comprenant un renfoncement (50) recevant un joint d'étanchéité (56) et empêchant la migration d'un adhésif associé au joint d'étanchéité (56), qui peut contaminer la structure poreuse.

2. Procédé selon la revendication 1, dans lequel la structure poreuse (42) est l'une parmi une plaque poreuse d'anode (34) et une plaque poreuse de cathode (36).

3. Procédé selon la revendication 1 ou 2, dans lequel la transformation comprend la densification de l'au moins une surface (46).

4. Procédé selon la revendication 3, dans lequel la transformation comprend l'exposition de l'au moins une surface (46) à un environnement riche en carbone.

5. Procédé selon la revendication 4, dans lequel l'environnement riche en carbone est fourni dans un procédé de dépôt chimique en phase vapeur.

6. Procédé selon la revendication 1, dans lequel la transformation comprend l'application d'un joint d'étanchéité (56) sur la région non poreuse (58), l'étape d'application étant réalisée après l'étape de traitement.

7. Procédé selon la revendication 3, dans lequel la structure poreuse (42) comprend une première porosité et la région non poreuse (58) comprend une seconde porosité qui est inférieure à la première porosité.
